(19) Europäisches Patentamt
European Patent Office
Office européen des brevets

(11) Veröffentlichungsnummer : **0 043 484**
**B1**

(12) # EUROPÄISCHE PATENTSCHRIFT

(45) Veröffentlichungstag der Patentschrift : **29.02.84**

(51) Int. Cl.[3] : **C 08 F299/04**

(21) Anmeldenummer : **81104781.0**

(22) Anmeldetag : **22.06.81**

(54) **Bei Raumtemperatur härtbare ungesättigte Polyesterharzmassen, Verfahren zu ihrer Härtung und daraus hergestellte Formkörper.**

(30) Priorität : **03.07.80 DE 3025222**

(43) Veröffentlichungstag der Anmeldung : **13.01.82 Patentblatt 82/02**

(45) Bekanntmachung des Hinweises auf die Patenterteilung : **29.02.84 Patentblatt 84/09**

(84) Benannte Vertragsstaaten : **AT DE FR GB IT NL SE**

(56) Entgegenhaltungen :
**FR-A- 1 391 476**
**GB-A- 941 067**
**US-A- 3 091 936**
**US-A- 3 449 276**
**US-A- 3 840 618**
**Die Akte enthält technische Angaben, die nach dem Eingang der Anmeldung eingereicht wurden und die nicht in dieser Patentschrift enthalten sind.**

(73) Patentinhaber : **BAYER AG**
**Zentralbereich Patente, Marken und Lizenzen**
**D-5090 Leverkusen 1, Bayerwerk (DE)**

(72) Erfinder : **Schulz-Walz, Hansjochen, Dr.**
**Am Egelsberg 30**
**D-4150 Krefeld 1 (DE)**

**EP 0 043 484 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Bei Raumtemperatur härtbare ungesättigte Polyesterharzmassen, Verfahren zu ihrer Härtung und daraus hergestellte Formkörper

Die Erfindung betrifft bei Raumtemperatur härtbare ungesättigte Polyesterharzmassen, die nebeneinander einen Kupferkomplex, ein Amin und eine Cobaltverbindung enthalten, ein verfahren zu ihrer Härtung durch Zugabe von Ketonperoxiden und aus diesen Harzmassen hergestellte Formkörper.

Verfahren zur Herstellung von Formkörpern aus ungesättigten Polyesterharzen, also Mischungen α, β-ethylenisch ungesättigter Polyester in damit copolymerisierbaren Monomeren, werden z. B. von R. Vieweg und L. Goerden in Kunststoff-Handbuch, Bd. VIII, « Polyester », Carl Hanser Verlag, München 1973, 317 ff., beschrieben. Nach den verwendeten Härtersystemen lassen sich diese Verfahren in zwei Kategorien einteilen :

1. Die Härtung mit Acylperoxiden, z. B. Benzoylperoxid, und aromatischen tertiären Aminen verläuft sehr heftig, und die starke Wärmeentwicklung kann zu inneren Spannungen, zum Kochen des copolymerisierbaren Monomeren und — dadurch bewirkt — zu Blasenbildung und Delaminierungserscheinungen führen. Es kann sogar vorkommen, daß das Laminat im Innern verkohlt.

2. Die Härtungsreaktion mit Ketonperoxiden, z. B. Methylethylketonperoxid, und Cobaltbeschleunigern verläuft erheblich milder. Durch den verlängerten Härtungsverlauf entwickelt sich ein ungünstiges Gelierzeit/Härtezeit-Verhältnis : Die Zeitspanne vom Formen des Formkörpers bis zu seiner Entformung zieht sich in die Länge.

Anstelle von Cobaltbeschleunigern können auch Vanadiumverbindungen eingesetzt werden. Die damit versetzten Polyesterharze haben sich jedoch als nicht genügend lagerstabil erwiesen.

Aus der DE-AS 1 032 919, insbesondere den Beispielen VI, IX und X, ist die stabilisierende Wirkung von Kupfersalzen in Kombination mit sekundären aromatischen Diaminen bzw. quarternären Ammoniumsalzen auf ungesättigte Polyesterharze bekannt.

Die DE-AS 1 224 488 beschreibt die Stabilisierung von Amin-haltigen Polyesterharzen mit Kupfersalzen ; die Härtung erfolgt mit Acylperoxiden.

Um die durch Zusatz von Kupferverbindungen bewirkte unerwünschte Verfärbung von Aminvorbeschleunigten Polyesterharzen zu vermeiden, wird gemäß DE-AS 1 544 861 der Zusatz von Kupfer(I)-halogenidkomplexen empfohlen.

Die US-PS 3 091 936 beschreibt die Verwendung einer Kupfersalz/Amin-Kombination als Stabilisatorsystem für Polyesterharze, die mit Cobaltverbindungen und Ketonperoxiden gehärtet werden. Eine beschleunigende Wirkung entfalten die Kupfersalze nicht.

Aus keiner der obigen Literaturstellen geht hervor, daß Kupferkomplexverbindungen auch als Beschleuniger für die Härtung von Polyesterharzen, die Amine und Cobaltverbindungen enthalten, mit Hilfe von Ketonperoxiden geeignet sind.

Überraschenderweise wurde nun gefunden, daß man Aminhaltige ungesättigte Polyesterharze in Gegenwart von Kupfer(I)-Komplexen und Cobaltverbindungen bei Raumtemperatur schnell härten kann, ohne daß dies mit den oben beschriebenen Nachteilen verbunden ist. Insbesondere lassen sich die erhaltenen Formkörper rasch entformen.

Die Gelierzeit kann durch Wahl des Amins innerhalb weiter Grenzen variiert werden ; außerordentlich kurze Gelierzeiten, wie sie bisher nur mit Amin/Acylperoxid-Systemen erreicht werden konnten, lassen sich mit weit geringerer Maximaltemperatur erhalten. Dadurch wird ein Kochen des copolymerisierbaren Monomeren mit den damit verbundenen Nachteilen verhindert, und man erhält spannungsarme Formteile. Die als « Reaktivitätsdrift » bekannte Reaktivitätsänderung während des Lagerns ist geringer als bei den bisher bekannten Cobalt-beschleunigten Systemen.

Die Härtung schreitet nach dem Gelieren rascher fort als bei dem bisher üblichen Cobaltsystem. Dadurch werden kürzere Entformzeiten und schnellere Taktzeiten möglich.

Infolge der schnelleren Durchhärtung werden auch ohne Tempern niedrigere Reststyrolgehalte, d. h. eine bessere Aushärtung, als bei einem vergleichbar eingestellten Cobaltsystem, erreicht. Auch mit weniger Peroxid oder bei tiefen Temperaturen unterscheidet sich das erfindungsgemäße vorteilhaft von den bisher bekannten Beschleunigungssystemen.

Gegenstand der Erfindung sind Formmassen, enthaltend

a) 20 bis 80, vorzugsweise 30 bis 70, Gewichtsteile mindestens eines α,β-ethylenisch ungesättigten Polyesters,

b) 80 bis 20, vorzugsweise 70 bis 30, Gewichtsteile mindestens eines damit copolymerisierbaren ungesättigten Monomeren,

c) 0,01 bis 10 Gewichtsteile mindestens eines Amins,

d) mindestens eine — vorzugsweise in a/b lösliche — Cobaltverbindung entsprechend einem Cobaltmetallgehalt von 0,000 1 bis 0,1 Gewichtsteilen,

e) 0,01 bis 10 Gewichtsteile mindestens einer Kupfer(I)- verbindung,

dadurch gekennzeichnet, daß die Kupfer(I)-verbindung e) als Komplex vorliegt und das Gewichtsverhältnis Kupfer/Cobalt 0,1 bis 10 000, vorzugsweise 1 bis 10, und das Gewichtsverhältnis Kupfer/Amin 0,001 bis

1, vorzugsweise 0,01 bis 0,1 — jeweils auf Metallgehalt bezogen — betragen.

Weiterer Gegenstand der Erfindung ist ein Verfahren zur Härtung dieser Formmassen, dadurch gekennzeichnet, daß man 0,1 bis 10, vorzugsweise 0,5 bis 3 Gewichtsteile Ketonperoxid zusetzt.

Ein weiterer Gegenstand der Erfindung sind aus diesen Formmassen hergestellte gehärtete Formkörper.

Bevorzugte α,β-ungesättigte Polyester a) sind die üblichen Polykondensationsprodukte mindestens einer α,β-ethylenisch ungesättigten Dicarbonsäure mit in der Regel 4 oder 5 C-Atomen oder deren esterbildenden Derivaten, z. B. ihren Anhydriden, gegebenenfalls in Abmischung mit bis zu 200 Mol-%, bezogen auf die ungesättigten Säurekomponenten, mindestens einer aliphatischen gesättigten oder cycloaliphatischen Dicarbonsäure mit 8-10 C-Atomen oder deren esterbildenden derivate mit mindestens einer Polyhydroxiverbindung, insbesondere Dihydroxiverbindung mit 2-8 C-Atomen — also Polyester, wie sie bei J. Björksten et al., « Polyesters and their Applications », Reinhold Publishing Corp., New York 1956, beschrieben sind.

Beispiele für bevorzugt zu verwendende ungesättigte Dicarbonsäuren oder ihre Derivate sind Maleinsäure oder Maleinsäureanhydrid und Fumarsäure. Verwendet werden können z. B. jedoch auch Mesaconsäure, Citraconsäure, Itaconsäure oder Chlormaleinsäure. Beispiele für die zu verwendenden aromatischen, aliphatischen gesättigten und cyclo-aliphatischen Dicarbonsäuren oder ihre Derivate sind Phthalsäure oder Phthalsäureanhydrid. Isophthalsäure, Terephthalsäure, Hexa- oder Tetrahydrophthalsäure bzw. deren Anhydride, Endomethylentetrahydrophthalsäure oder deren Anhydrid, Bernsteinsäure bzw. Bernsteinsäureanhydrid und Bernsteinsäureester und -chloride, Adipinsäure, Sebacinsäure. Um schwerentflammbare Harze herzustellen, können z. B. Hexachlorendomethylen-tetrahydrophthalsäure, Tetrachlorphthalsäure oder Tetrabromphthalsäure verwendet werden. Als zweiwertige Alkohole können Ethylenglykol, Propandiol-1,2, Propandiol-1,3, Diethylenglykol, Dipropylenglykol, Butandiol-1,3, Butandiol-1,4, Neopentylglykol, Hexandiol-1,6, 2,2-Bis-(4-hydroxycyclohexyl)-propan, bis-oxalkyliertes Bisphenol A, Perhydrobisphenol und andere eingesetzt werden. Bevorzugt verwendet werden Ethylenglykol, Propandiol-1,2, Diethylenglykol und Dipropylenglykol.

Weitere Modifikationen sind möglich durch Einbau ein-, drei- und vierwertiger Alkohole mit 1-6 C-Atomen, wie Methanol, Ethanol, Butanol, Allylalkohol, Benzylalkohol, Cyclohexanol und Tetrahydrofurfurylalkohol, Trimethylolpropan, Glycerin und Pentaerythrit, von Mono-, Di- und Triallylethern und Benzylethern drei- und mehrwertiger Alkohole mit 3-6 C-Atomen gemäß DE-AS 1 024 654, z. B. Trimethylolpropandiallylether, sowie durch Einbau einbasischer Säuren wie Benzoesäure oder Acrylsäure.

Die Säurezahlen der Polyester liegen gewöhnlich zwischen 10 und 100, vorzugsweise zwischen 20 und 70, die OH-Zahlen zwischen 10 und 150, vorzugsweise zwischen 20 und 100, und die als Zahlenmittel bestimmten Molekulargewichte $\bar{M}_n$ zwischen 500 und 5 000, vorzugsweise zwischen 1 000 und 3 000 (dampfdruckosmometrisch gemessen in Dioxan und Aceton ; bei differierenden Werten wird der niedrigere als der korrekte angesehen).

Als mit den ungesättigten Polyestern copolymerisierbare ungesättigte Monomere b) eignen sich in der Polyestertechnologie gebräuchliche ungesättigte Verbindungen, die bevorzugt α-substituierte Vinyl- oder Vinylidengruppen oder β-substituierte Allylgruppen tragen, bevorzugt Styrol ; aber auch beispielsweise kernchlorierte und -alkylierte bzw. -alkenylierte Styrole, wobei die Alkylgruppen 1-4 Kohlenstoffatome enthalten können, z. B. Vinyltoluol, Divinylbenzol, α-Methylstyrol- tert.- Butylstyrol, Chlorstyrole ; Vinylester von Carbonsäuren mit 2-6 Kohlenstoffatomen, bevorzugt Vinylacetat, Vinylpropionat, Vinylbenzoat ; Vinylpyridin, Vinylnaphthalin, Vinylcyclohexan, Acrylsäure und Methacrylsäure und/oder ihre Ester (vorzugsweise Vinyl-, Allyl- und Methallylester) mit 1-4 Kohlenstoffatomen in der Alkoholkomponente, ihre Amide und Nitrile, Maleinsäureanhydrid, -halb- und -diester mit 1-4 Kohlenstoffatomen in der Alkoholkomponente, -halb- und -diamide oder cyclische Imide wie Butylacrylat, Methylmethacrylat, Acrylnitril, N-Methylmaleinimid oder N-Cyclohexylmaleinimid ; Allylverbindungen wie Allylbenzol und Allylester wie Allylacetat, Phthalsäurediallylester, Isophthalsäurediallylester, Fumarsäurediallylester, Allylcarbonate, Diallylcarbonate, Triallylphosphat und Triallylcyanurat.

Als Amine c) eignen sich aliphatische, cycloaliphatische, aromatische, aliphatisch-aromatische und heterocyclische primäre, sekundäre und tertiäre Amine. Bevorzugte Amine c) entsprechen der Formel

$$NR^1R^2R^3 \qquad (I)$$

worin

$R^1$, $R^2$ ein Wasserstoffatom, einen Alkyl- oder Hydroxialkylrest mit 1-6 C-Atomen oder einen Cycloalkyl- bzw. Arylrest mit 6-10 C-Atomen und

$R^3$ einen Alkylrest mit 1-18 C-Atomen oder einen Arylrest mit 6-10 C-Atomen bedeuten ;

oder der Formel

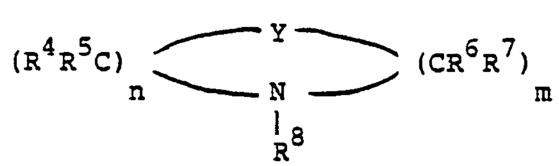

(II)

worin

Y ein Sauerstoff- oder Schwefelatom, $NR^9$ oder $CR^{10}R^{11}$,

$R^4$ bis $R^7$ und

$R^{10}$, $R^{11}$ einen Alkylrest mit 1-3 C-Atomen, einen Arylrest mit 6-10 C-Atomen, vorzugsweise ein Wasserstoffatom,

$R^8$, $R^9$ ein Wasserstoffatom, einen Alkylrest mit 1-6 C-Atomen, einen Cyclohexylrest oder einen gegebenenfalls substituierten Phenylrest und

n, m eine ganze Zahl von 1 bis 4 bedeuten ;

bevorzugte Amine c) sind weiterhin Pyrrol und Pyridin, die einen oder mehrere Alkylsubstituenten mit 1-3 C-Atomen oder Arylsubstituenten mit 6-10 C-Atomen tragen können.

Besonders bevorzugte Amine c) sind Ethylamin, Diethylamin, Triethylamin, Butylamin, Dodecylamin, Aminoethanol, Diethanolamin, Triethanolamin, Morpholin, N-Methylmorpholin, Piperidin, Pyrrolidin, Anilin, N-Methylanilin, Dimethylanilin, Cyclohexylamin, Pyridin, Chinolin, Picolin, 1,2-Diaminoethan und 1,4-Diazabicyclo-[2,2,2]-octan.

Zu den besonders bevorzugten Aminen c) zählen auch tertiäre aromatische Bis-hydroxyalkylamine, wie sie z. B. in der DE-AS 10 20 183 beschrieben sind, Monocarbonsäureester von Bis-hydroxyalkylaminen, wie sie z. B. in der DE-AS 11 64 084 beschrieben sind, und als Beschleuniger wirksame Polykondensate und Polymerisate, die Amine über reaktive Gruppen eingebaut enthalten, wie sie z. B. in der DE-PS 919 431 und in der GB-PS 11 29 861 beschrieben sind.

Bevorzugte Cobaltverbindungen d) sind vor allem die in Polyesterharzen löslichen Salze wie Naphthenat, Resinat, Oleat, Linolat oder Octoat, ferner Maleat oder Citraconat.

Bevorzugte Kupfer(I)komplexe e) sind Komplexverbindungen von Kupfer(I)chlorid bzw. Kupfer(I)bromid mit neutralen Phosphorigsäureestern, z. B. mit Triethylphosphit, 2,2',2"-Trischlorethylphosphit, Tripropylphosphit, Triphenylphosphit, wie sie z. B. in Gmelins Handbuch der anorganischen Chemie, System Nr. 60, Teil B, Lieferung 1, 8. Aufl., Verlag Chemie, Weinheim 1958, S. 251 und 365, beschrieben sind.

Für die Härtung bevorzugt eingesetzte Ketonperoxide sind Cyclohexanonperoxid, Acetylacetonperoxid, Methylisobutylperoxid und Methylethylketonperoxid, eventuell im Gemisch mit Hydroperoxiden wie Cumolhydroperoxid oder tert.-Butylhydroperoxid.

Besonders vorteilhaft für den Anwender ist das Farbspiel, das durch den deutlichen Farbumschlag bei der Peroxidzugabe ausschließt, daß das Peroxid vergessen werden kann. Dadurch wird vermieden, daß durch Unachtsamkeit Formteile laminiert werden, die nachher nicht aushärten. Ein weiterer allmählicher Farbumschlag zeigt an, daß der Ansatz in Kürze gelieren wird. Der Verarbeiter kann sich dadurch seine Arbeit besser einteilen und vermeidet Werkzeugverluste oder Fehler in den Formteilen, die dadurch entstehen, daß das Harz unvermutet rasch geliert und das Laminat nicht mehr ordnungsgemäß fertiggestellt werden kann.

Die erfindungsgemäßen Formmassen können in den üblichen Mengen Polymerisationsinhibitoren, die eine vorzeitige, unkontrollierte Gelierung verhindern, beispielsweise Hydrochinon, Toluhydrochinon, p-Benzochinon, p-tert.-Butylbrenzcatechin, Chloranil, Naphthochinon oder p-Nitrosodimethylanilin, enthalten.

Die erfindungsgemäßen Formmassen können weiterhin Thixotropiermittel enthalten. Als solche eignen sich beispielsweise anorganische, wie pyrogene Kieselsäure, Asbestfasern, oder organische, die Säureamidgruppen oder Urethangruppen enthalten, oder Cyclohexylamide höherer Fettsäuren (DE-AS 11 82 816, 12 17 611, BE 693 580).

Wenn auch die erfindungsgemäßen Formmassen nach Zugabe des Ketonperoxids bei Raumtemperatur härten, kann die Härtung durch äußere Wärmezufuhr oder durch Einwirkung von Strahlen beschleunigt werden.

Die erfindungsgemäßen Formmassen können Füll- und/oder Verstärkungsmaterialien enthalten. Als Füllstoffe können feingemahlene Gesteinsarten wie z. B. Kreide, Kalk, Kaolin oder Quarz dienen. Auch synthetisch hergestellte anorganische oder organische Pulver, wie z. B. Aluminiumhydroxid, gefälltes Calciumcarbonat, Polyethylen- oder PVC-Pulver, Farbstoffe oder Pigmente, aber auch größere Füllstoffe, wie Sand oder Kies, können verwendet werden. Als Verstärkungsmaterialien werden anorganische oder organische Fasern in Form von Strängen (Rovings), Matten oder Geweben eingesetzt. Am gebräuchlichsten sind Glasfasern ; möglich sind jedoch auch Kohlenstofffasern, synthetische Fasern aus Polyethylenterphthalat, Polyacrylnitril, Polyamid, Polypropylen alleine oder im Gemisch mit anderen.

## Beispiele

Aus 1,05 Mol Propylenglykol, 0,45 Mol Maleinsäureanhydrid und 0,55 Mol Phthalsäureanhydrid wurde durch Schmelzkondensation ein ungesättigter Polyester mit einer Säurezahl von 28 hergestellt. 65 Gewichtsteile dieses Polyesters wurden in 35 Gewichtsteilen Styrol gelöst, das mit 0,036 Gew.-% Hydrochinon stabilisiert war (im folgenden « Polyesterharz » genannt).

Herstellung des Cu(I)-Komplexes :

9,9 g Kupfer(I)chlorid, 37,5 g Tributylphosphit und 20 g Toluol wurden unter Stickstoff am Rückflußkühler zum Sieden erhitzt, bis das Kupfer(I)chlorid vollständig gelöst war und das Ende der Reaktion sich

durch den Farbumschlag von gelblich/trüb nach farblos/klar bemerkbar machte. Die Lösung, die einen Kupfergehalt von ca. 9,4 % Gew.-% hatte, wurde unter Stickstoffatmosphäre in eine braune Glasflasche abgefüllt.

Die in den folgenden Beispielen genannten Teile sind Gewichtsteile ; Prozentangaben beziehen sich auf das Gewicht.

Beispiel 1

Gemäß folgender Tabelle wurden Harzansätze hergestellt und die Härtezeiten entsprechend DIN 16945 gemessen.

| | | | | Teile | | | |
|---|---|---|---|---|---|---|---|
| Versuch | 1a | 1b | 1c | 1d | 1e | 1f | 1g |
| Polyesterharz | 100 | 100 | 100 | 100 | 100 | 100 | 100 |
| Co-octoat (1 % Metallgehalt in Dioctylphthalat) | 0,5 | 0,75 | — | — | — | — | — |
| Cu(I) komplex | — | — | 0,1 | 0,1 | 0,1 | 0,1 | 0,1 |
| Morpholin | — | — | 0,3 | — | — | — | — |
| Cyclohexylamin | — | — | — | 0,34 | — | — | — |
| Dimethylanilin | — | — | — | — | 0,42 | — | — |
| Methylanilin | — | — | — | — | — | 0,37 | — |
| Pyridin | — | — | — | — | — | — | 0,27 |
| Methylethylketonperoxid | 2 | 2 | 2 | 2 | 2 | 2 | 2 |
| Härtezeiten (100 g-Blöcke) in Minuten : | | | | | | | |
| Zeit von 25°-35 °C | 14 | 11 | 29 | 155 | 7 | — | 60 |
| von 25 °C-$T_{max}$ | 23 | 20 | 75 | 219 | 15 | 13 | 95 |
| $T_{max}$ (°C) | 164 | 165 | 115 | 95 | 122 | 34 | 98 |

Beispiel 2

Gemäß folgender Tabelle wurden Härtungen entsprechend DIN 16945 an frisch hergestellten Harzansätzen und an den gleichen, nachdem sie — ohne Peroxid — 45 Tage bei Raumtemperatur gelagert worden waren, gemessen.

| | | | Teile | |
|---|---|---|---|---|
| Versuch | 2a | 2b | 2c | 2d |
| Polyesterharz | 100 | 100 | 100 | 100 |
| Co-octoat-Lösung (1 % Metallgehalt) | 0,75 | 0,75 | 0,75 | 0,75 |
| Cu(I)komplex | — | — | 0,1 | 0,1 |
| Morpholin | — | — | 0,3 | 0,3 |
| Hydrochinonlösung (1 %ig in Ethylglykolacetat/Styrol, Gewichtsverhältnis 1 : 1) | — | — | 1,75 | 1,75 |
| Methylethylketonperoxid | 1 | 2 | 1 | 2 |
| Härtung sofort (Härtezeit in Minuten): | | | | |
| Zeit von 25°-35 °C | 26 | 10 | 39 | 16 |
| von 25 °C-$T_{max}$ | 48 | 23 | 55 | 24 |
| Härtung nach 45 Tagen (Härtezeit in Minuten) : | | | | |
| Zeit von 25°-35 °C | 46 | 18 | 45 | 18 |
| von 25 °C-$T_{max}$ | 79 | 35 | 65 | 25 |
| Verlängerungsfaktor (Härtezeit nach 45 Tagen : Härtezeit sofort) : | | | | |
| Zeit von 25°-35 °C | 1,77 | 1,80 | 1,15 | 1,13 |
| von 25 °C-$T_{max}$ | 1,65 | 1,52 | 1,18 | 1,04 |

Beispiel 3

Entsprechend folgender Tabelle wurden Harzansätze gemischt und daraus Laminate hergestellt, die 4 Lagen Glasfasermatte, 450 g/m$^2$, enthielten. Die Gelierzeit des Ansatzes im Becher sowie im Laminat wurde festgehalten.

Nach dem Gelieren des Laminats wurde im Abstand von 20 Minuten jeweils die Härte des Laminats (Shore D) gemessen sowie die Entformbarkeit geprüft. Zu diesem Zweck wurde das Laminat so scharfkantig wie möglich um ca. 90° gebogen. Hierbei trat zuerst Weißbruch ein. Erst wenn das Laminat sich nicht mehr unter Weißbruch biegen ließ, wurde bei Entformbarkeit mit « in Ordnung (i. O.) » bezeichnet.

| | Teile | |
|---|---|---|
| Versuch | 3a | 3b |
| Polyesterharz | 100 | 100 |
| Co-octoat (1 % Metall in Dioctylphthalat) | 0,3 | 0,45 |
| Cu(I) komplex | — | 0,1 |
| Morpholin | — | 0,3 |
| Hydrochinonlösung (1 %ig in Ethylglykolacetat/Styrol, Gewichtsverhältnis 1 : 1) | 0,9 | 1,75 |
| Paraffinlösung (10 %ig in Styrol) | 4 | 4 |
| Methylethylketonperoxid | 2 | 2 |
| Gelierzeit im Becher (Minuten) : | 19 | 21 |
| Gelierzeit im Laminat (Minuten) | 26 | 32 |
| Härte (Shore D) nach 20 Minuten | 36, Weißbruch | 69, leichter Weißbruch |
| nach 40 Minuten | 58, Weißbruch | 81, leichter Weißbruch |
| nach 60 Minuten | 68, Weißbruch | 81, i. O. |
| nach 80 Minuten | 73, Weißbruch | |
| nach 100 Minuten | 73, leichter | Weißbruch |
| nach 120 Minuten | 73, leichter | Weißbruch |
| nach 140 Minuten | 75, leichter | Weißbruch |
| nach 160 Minuten | 77, leichter | Weißbruch |
| nach 180 Minuten | 77, i. O. | |
| Reststyrolgehalt, bezogen auf Harz, nach 3 Tagen Lagerung bei Raumtemperatur | 5,8 Gew.-% | 3,9 Gew.-% |
| Farbe des Ansatzes : | | |
| von Peroxidzugabe | leicht rosa | leicht fliederfarben |
| nach Peroxidzugabe | allmählich nach grünlich umschlagend | sofort stahlblau allmählich nach grün umschlagend |
| vor dem Gelieren | unverändert | grünbraun |
| nach dem Aushärten | unverändert | bräunlich |

**Ansprüche**

1. Formmassen enthaltend

a) 20 bis 80, vorzugsweise 30 bis 70, Gewichtsteile mindestens eines α,β-ethylenisch ungesättigten Polyesters,

b) 80 bis 20, vorzugsweise 70 bis 30, Gewichtsteile mindestens eines damit copolymerisierbaren ungesättigten Monomeren,

c) 0,01 bis 10 Gewichtsteile mindestens eines Amins,

d) mindestens eine — vorzugsweise in a/b lösliche — Cobaltverbindung entsprechend einem Metallgehalt von 0,000 1 bis 0,1 Gewichtsteilen,

e) 0,01 bis 10 Gewichtsteile mindestens einer Kupfer(I)verbindung,

dadurch gekennzeichnet, daß die Kupfer(I)verbindung e) als Komplex vorliegt und das Gewichtsverhältnis Kupfer/Cobalt 0,1 bis 10 000, vorzugsweise 1 bis 10, und das Gewichtsverhältnis Kupfer/Amin 0,000 1 bis 1, vorzugsweise 0,01 bis 0,1 — jeweils auf Metallgehalt bezogen — betragen.

2. Formmassen nach Anspruch 1, dadurch gekennzeichnet, daß als Kupfer(I)-Komplex eine Komplexverbindung von Kupfer(I)chlorid oder Kupfer(I)bromid und einem neutralen Phosphorigsäureester verwendet wird.

3. Formmassen nach Ansprüchen 1 und 2, dadurch gekennzeichnet, daß die Cobaltverbindung d)

aus der Reihe Cobaltnaphthenat und Cobaltoctoat ausgewählt wird.

4. Verfahren zur Härtung der Formmassen nach Ansprüchen 1-3, dadurch gekennzeichnet, daß man den Formmassen 0,1 bis 10 Gewichtsteile Ketonperoxid zusetzt.

5. Verfahren nach Anspruch 4, dadurch gekennzeichnet, daß man das Ketonperoxid aus der Reihe Cyclohexanonperoxid, Acetylacetonperoxid, Methylisobutylketonperoxid und Methylethylketonperoxid auswählt.

6. Aus Formmassen gemäß Ansprüchen 1-3 hergestellte gehärtete Formkörper.

**Claims**

1. Moulding compositions containing

a) 20 to 80, preferably 30 to 70, parts by weight of at least one α-β-ethylenically unsaturated polyester,

b) 80 to 20, preferably 70 to 30, parts by weight of at least one unsaturated monomer copolymerisable therewith,

c) 0.01 to 10 parts by weight of at least one amine,

d) at least one cobalt compound — preferably soluble in a/b — corresponding to a metal content of 0.000 1 to 0.1 parts by weight, and

e) 0.01 to 10 parts by weight of at least one copper(I) compound,

characterised in that the copper(I) compound e) is present in the form of a complex and the ratio by weight of copper to cobalt is 0.1 to 10.000, preferably 1 to 10, and the ratio by weight of copper to amine is 0.001 to 1, preferably 0.01 to 0.1 — based in case on the metal content.

2. Moulding compositions according to Claim 1, characterised in that the copper(I) complex used is a complexe compound of copper(I) chloride or copper(I) bromide and a neutral phosphorous acid ester.

3. Moulding compositions according to Claims 1 and 2, characterised in that the cobalt compound d) is selected from the series comprising cobalt naphthenate and cobalt octoate.

4. Process for hardening the moulding compositions according to Claims 1-3, characterised in that 0.1 to 10 parts by weight of ketone peroxide are added to the moulding compositions.

5. Process according to Claim 4, characterised in that the ketone peroxide is selected from the series comprising cyclohexanone peroxide, acetylacetone peroxide, methyl isobutyl ketone peroxide and methyl ethyl ketone peroxide.

6. Hardened mouldings produced from moulding compositions according to Claims 1-3.

**Revendications**

1. Compositions à mouler contenant :

a) 20 à 80, avantageusement 30 à 70, parties en poids d'au moins un polyester à insaturation éthylénique en α,β ;

b) 80 à 20, avantageusement 70 à 30, parties en poids d'au moins un monomère insaturé pouvant copolymériser avec le polyester,

c) 0,01 à 10 parties en poids d'au moins une amine,

d) au moins un composé du cobalt — avantageusement soluble dans a/b — correspondant à une teneur en métal de 0,000 1 à 0,1 partie en poids,

e) 0,01 à 10 parties en poids d'au moins un composé du cuivre-(I),

caractérisées en ce que le composé e) du cuivre-(I) est présent sous forme de complexe et en ce que le rapport pondéral cuivre/cobalt est de 0,1 à 10 000, avantageusement de 1 à 10, et le rapport pondéral cuivre/amine est de 0,001 à 1, avantageusement de 0,01 à 0,1, chaque fois par rapport à la teneur en métal.

2. Compositions à mouler selon la revendication 1, caractérisées en ce qu'on utilise comme complexe du cuivre-(I) un composé complexe du chlorure de cuivre-(I) ou du bromure de cuivre-(I) et un ester neutre de l'acide phosphoreux.

3. Compositions à mouler selon les revendications 1 et 2, caractérisées en ce que le composé du cobalt d) est choisi parmi l'ensemble formé par le naphténate de cobalt et l'octoate de cobalt.

4. Procédé de durcissement de compositions à mouler selon les revendications 1 à 3, caractérisé en ce que l'on ajoute aux compositions à mouler 0,1 à 10 parties en poids de peroxyde de cétone.

5. Procédé selon la revendication 4, caractérisé en ce qu'on choisit le peroxyde de cétone dans l'ensemble formé par le peroxyde de cyclohexanone, le peroxyde d'acétylacétone, le peroxyde de méthylisobutylcétone et le peroxyde de méthyléthylcétone.

6. Objets moulés durcis produits à partir de compositions à mouler selon les revendications 1 à 3.